# EUROPEAN PATENT SPECIFICATION

(11) **EP 2 939 830 B1**
(45) Date of publication and mention of the grant of the patent: **06.03.2019**
(21) Application number: 15165092.6
(22) Date of filing: 24.04.2015
(51) Int. Cl.: B32B 27/10, B32B 29/00, B65D 65/42, B65D 30/06, B65D 85/34

(54) **PACKAGING BAND**
VERPACKUNGSBAND
BANDE D'EMBALLAGE

(30) Priority: 25.04.2014 GB 201407355
(43) Date of publication of application: 04.11.2015
(73) Proprietor: Leading Edge Labels Ltd, Gravesend, Kent DA11 0DP (GB)
(72) Inventor: Brown, Mike, GRAVESEND, Kent DA11 0DP (GB)
(74) Representative: Lock, Graham James

(56) References cited:
- EP-A1- 0 405 595
- EP-A1- 1 364 888
- EP-A2- 2 762 416
- US-A- 4 403 637
- US-A- 5 823 683

## Description

The present invention relates to a composition for use in production of packaging for foods. A band produced of the composition together with a net can be useful in the production of a pack for packaging of fruit or other foods.

### Background of the Invention

There is a general trend in the packaging industry to find environmentally friendly forms of food packaging. The trend is based on solving three main problems:
- Reduce - the problem of reducing the amount of packaging for products.
- Re-use - the problem of re-using as much packaging as possible.
- Re-cycle - the problem of producing packaging from used packaging.

For many years, food including fruit such as oranges, satsumas and apples; or vegetables, such as potatoes, has been packaged into a pack comprising a net and a polyethylene band. The net comprises a tube drawn together and sealed at both ends. The band has been wrapped around the net and sealed to both ends of the net. The net provides the advantage of allowing air to circulate around the food. The band serves consumers as a handle for the pack.

It is known to produce the band of polyethylene because this provides the advantage that the band can be processed by packing machines to seal the top and bottom of the net by heat sealing the net to the band. Under the heat applied in a packaging machine, the band and net weld together. The band can then also be used as a handle for the pack.

Polyethylene bands used until now are not re-useable or re-cyclable and so tend to end up in waste landfill. Because polyethylene polymers only degrade naturally at an extremely low rate, the current net and band are not considered biodegradable, meaning that once placed into a waste landlfill it will remain in the landfill in its current form for a long period of time.

Various proposals have been made for alternative packaging, but there remains a need for environmentally friendly packaging for foods which address one or more of the problems presented by prior art arrangements.

Remarkably, a new composition has been found which can be used in production of packaging for foods and a band which addresses the problems discussed above can be produced of the composition. The band can be useful in the packaging of fruit or other foods. The invention provides the advantage that a band can be provided that is significantly more environmentally friendly than known bands and it can be substituted for known bands without significantly affecting packaging facilities.

### Summary of the Invention

In accordance with a first aspect of the present invention, there is provided a composition for use in production of packaging for food products wherein the composition comprises a laminated structure having a least one lamella of paper and at least one lamella having a thickness of about 20µm to about 40µm of polymer comprising polyethylene, wherein the polymer comprising polyethylene comprises an oxo-biodegradable additive and the polymer comprising polyethylene comprises up to 3% of the oxo-biodegradable additive.

Preferably, the lamella of paper comprises an uncoated formable paper. Preferably, the paper is capable of transferring heat applied during a heat sealing process wherein the polymer comprising polyethylene is at least partly melted. In a preferred embodiment, the thickness of the paper is about 75gsm to about 85gsm paper. Most preferably, it is about 80gsm paper.

Preferably, the lamella of polymer comprising polyethylene at least partly melts under conditions of heat applied during a heat sealing process. Preferably, the polymer comprising polyethylene is capable of heat sealing to itself as well as an adjacent polyethylene net. In a preferred embodiment, the thickness of the polyethylene coating is about 30µm.

Preferably, the composition is oxo-biodegradable. In this regard, preferably the paper is naturally biodegradable. Preferably, the polymer comprising polyethylene comprises about 1% additive containing one or more organic compounds of transition metal salts. Preferably, the metal salts are salts of iron, nickel, cobalt or magnesium). Without wishing to be bound by theory, the additive acts as a catalyst to a two stage process. In a first stage, oxidation introduces oxygen into the polyethylene and the polymers breakup into smaller chains with a lower molecular weight. In a second stage, these smaller chains become brittle and non plastic and the polyethylene breaks into smaller pieces and is subject to biodegradability by bacteria into biomass, C02 and H20. This provides the advantage of rendering the polymer comprising polyethylene biodegradable, thereby making the entire band including the composition biodegradable.

Advantageously, the composition can be easily printed on to display information about the food products. In addition, advantageously, the composition is "food safe", meaning that it is hygienic and does not transmit contamination to foods.

In a second aspect, the invention provides a band produced of the composition according to the invention for securing to a net comprising a tube drawn together and sealed at first and second ends wherein the band is capable of being wrapped around the net and heat sealed to the ends of the net.

In a third aspect, the invention provides a pack comprising a net and a band according to the invention, wherein the net comprises a tube drawn together and sealed at first and second ends and the band is wrapped around the net and sealed to the ends of the net at first and second heat seal areas of the band.

Preferably, the band comprises a first face and a second face, wherein the first face faces the net and the second face faces away from the net. Preferably, at least the first face comprises a lamella of polymer comprising polyethylene. Preferably, at least the second face comprises a lamella of paper.

Preferably, a front band is secured to the net and a back band is secured to the net opposite the front band. The front band and the back band are heat sealed together and to the ends of the net at first and second heat seal areas of the bands.

Preferably, the first heat seal area is greater in size than the second seal area. This provides the advantage of providing a tab which could be used eg for labelling at the top of the pack.

Advantageously, the composition of the invention allows the net to be heat sealed using the same or similar methods to those currently used for heat sealing conventional packaging bands, but in addition it provides at least the additional advantage of reducing the amount of polyethylene used in packaging, providing biodegradable packaging and providing a product that could be used for energy recovery.

With regard to reducing the amount of plastics (polyethylene) used, the amount used in a composition of the invention is much less than used in existing packaging bands. Existing bands range from about 70 micrometers to about 90 micrometers in thickness. In stark contrast, a band according to the present invention has a coating which is between about 20 micrometers and about 40 micrometers depending on the weight of the final pack. Therefore the invention reduces the amount of plastics used by at least about 50%.

Advantageously, uncoated paper is biodegradable. Therefore, wherever possible it is desirable to use paper instead of non-biodegradable plastics. The invention makes use of paper to provide a packaging band having a sufficient strength, whereas until now this has been achieved by using polyethylene alone. The paper in a composition according to the invention is 80gsm paper, but thinner or thicker versions could equally be used. By using an uncoated paper, the paper is highly biodegradable.

Advantageously, by mixing an oxo-biodegradable additive to the composition of the polymer comprising polyethylene, the polymer also becomes biodegradable, thereby making an entire band produced of a composition according to the invention oxo-biodegradable.

Preferably, an oxo-biodegradable additive is additionally included in the compostion of a net of a pack according to the invention, thereby rendering the entire pack oxo-biodegradable.

Advantageously, a composition or band of the invention can be used for energy recovery if required, for example, by burning the paper / polyethylene band to generate heat.

Preferably, the band is used to heat seal a net used to package fruit and other foods. In this regard, the net comprises a tube having a first end and a second end and the first end and second end are sealed by heat welding thereby closing the net around the fruit or other foods. Simultaneously, a band is sealed to the net at the first and second ends by heat welding.

Preferably, the band is comprised of an 80gsm paper with a polyethylene coating on the reverse side ranging between 20 and 40 micron.

Preferably the invention makes use of a polymer comprising a polyethylene coating which has an oxo-biodegradable additive within it which makes it biodegradable. When combined the paper and polyethylene band is oxo-biodegradable. Oxo biodegradation occurs when then material is exposed to oxygen and heat. This product breaks down into smaller molecules which will then break down further into carbon dioxide, water and biomass through reaction with naturally occurring organisms. These conditions occur when the material is subject to :
- The first 3 metres of a landfill site
- When buried or otherwise in contact with soil where bacteria and oxygen can break down the materials to carbon dioxide and water.
- Commercial Composting sites

Preferably, the outer paper side of the band is printed

Preferably, the band is between 70mm and 100mm wide.

Preferably, the band is provided in the form of a continuous roll. Preferably, it is cut into lengths at the time of application by heat sealing to the net of a pack according to the invention.

### Brief Description of the Drawings

The invention will now be described in detail by reference to the accompanying drawings; in which;

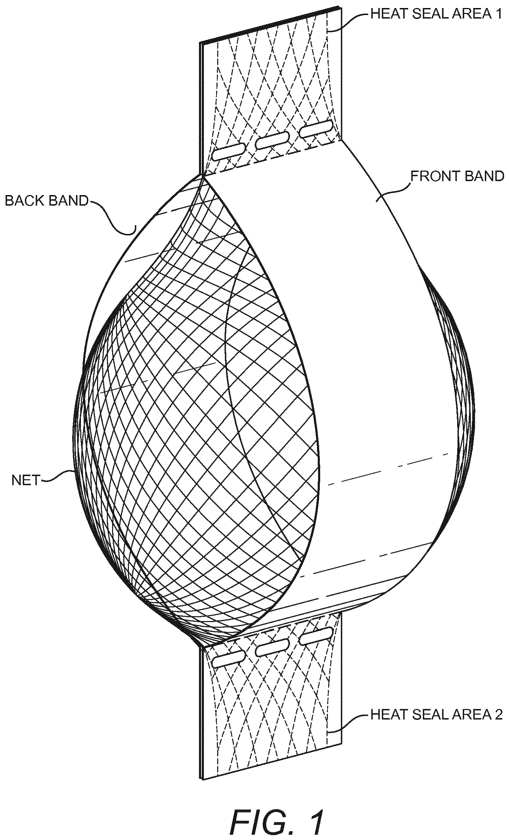

Figure 1 shows a perspective view of a pack according to the invention;

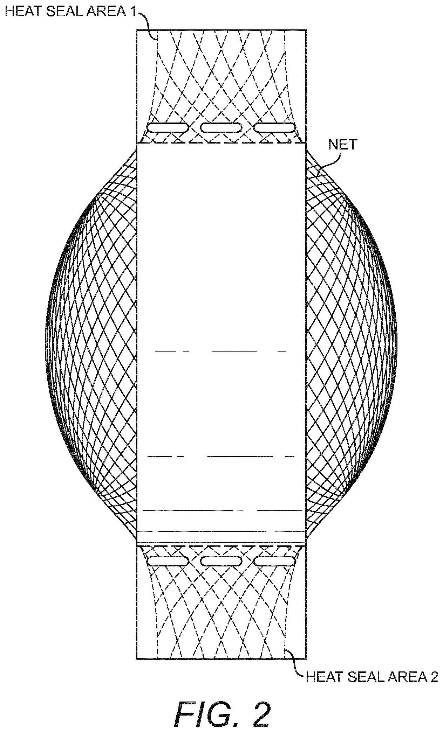

Figure 2 shows a view of a pack according to the invention from the front.

### Detailed Description of the Invention

It will be appreciated that aspects, embodiments and preferred features of the invention have been described herein in a way that allows the specification to be written in a clear and concise way. However, unless circumstances clearly dictate otherwise, aspects, embodiments and preferred features can be variously combined or separated in accordance with the invention. In a preferred embodiment, a device in accordance with the invention comprises all aspects of the invention.

Within the context of this specification, the word "about" means preferably plus or minus 20%, more preferably plus or minus 10%, even more preferably plus or minus 5%, most preferably plus or minus 2%.

Within the context of this specification, the word "comprises" means "includes, among other things" and should not be construed to mean "consists of only".

Within the context of this specification, the word "substantially" means preferably at least 90%, more preferably 95%, even more preferably 98%, most preferably 99%.

According to the invention, there is provided a composition for use in production of packaging for foods or food products wherein the composition comprises a laminated structure and wherein a least one lamella of paper is coated with at least one lamella of a polymer comprising polyethylene.

The lamella of paper comprises an uncoated formable paper. The paper is capable of transferring heat applied during a heat sealing process wherein the polymer comprising polyethylene is at least partly melted. The paper is 80gsm paper.

The lamella of polymer comprising polyethylene comprises a lamella which at least partly melts under conditions of heat applied during a heat sealing process. Preferably, the polymer comprising polyethylene is capable of heat sealing to itself as well as an adjacent polyethylene net. The thickness of the polyethylene coating is 30µm.

The polymer comprising polyethylene additionally comprises an oxo-biodegradable additive. This results in the composition being oxo-biodegradable. In this regard, the paper is naturally biodegradable. The polymer comprising polyethylene comprises about 1% additive containing one or more organic compounds of transition metal salts selected from iron, nickel, cobalt or magnesium salts.

A band produced of the composition can be used for securing to a net. The net comprises a tube drawn together and sealed at first and second ends. The band is wrapped around the net and sealed to the ends of the net at heat seal area 1 and heat seal area 2.

In one embodiment, a front band is secured to the net and a back band is secured to the net opposite the front band. The front band and the back band are heat sealed together and to the ends of the net at heat seal area 1 and heat seal area 2.

Preferably, heat seal area 1 is greater in size than heat seal area 2. This provides the advantage of providing a tab which could be used eg for labelling at the top of the pack.

A pack comprising a net and a band according to the invention can be used to package food. The net comprises a tube of netting drawn together and sealed at first and second ends. A band is wrapped around the net and sealed to the ends of the net.

The pack comprises a band having a first face and a second face, wherein the first face faces the net and the second face faces away from the net. The first face is of a lamella of polymer comprising polyethylene. The second face is of a lamella of paper.

The pack comprises a band wrapped around the net and sealed to the ends of the net at heat seal area 1 and heat seal area 2.

In one embodiment of the pack, a front band is secured to the net and a back band is secured to the net opposite the front band. The front band and the back band are heat sealed together and to the ends of the net at heat seal area 1 and heat seal area 2.

Heat seal area 1 is greater in size than heat seal area 2. This provides the advantage of providing a tab which could be used eg for labelling at the top of the pack.

An oxo-biodegradable additive is mixed with the polyethylene, so that the polyethylene is biodegradable.

An oxo-biodegradable additive is additionally included in the net of a pack according to the invention, thereby rendering the entire pack biodegradable.

The paper is naturally biodegradable.

The polymer comprising polyethelene has an oxo-biodegradable additive within it which makes it biodegradable. When combined the band is Oxo-biodegradable.

The assembly of a pack of the present invention is formed by feeding a tube of net into a packaging machine. The machine seals food into a pack by sealing the tube at a first end of the tube and a second end of the tube. Simultaneously, a band is cut and sealed to the pack at the first end of the tube and at the second end of the tube. The band comprises a heat seal area 1 adjacent one end of the band and a heat seal area 2 adjacent a second end of the band.

## Claims

1. A composition for use in production of packaging for foods or food products wherein the composition comprises a laminated structure having a least one lamella of paper and at least one lamella having a thickness of about 20µm to about 40µm of polymer comprising polyethylene wherein the polymer comprising polyethylene comprises an oxo-biodegradable additive and the polymer comprising polyethylene comprises up to 3% of the oxo-biodegradable additive.

2. A composition according to claim 1 wherein the lamella of paper comprises an uncoated formable paper.

3. A composition according to claim 1 or 2 wherein the paper is capable of transferring heat applied during a heat sealing process wherein the polymer comprising polyethylene is at least partly melted; optionally wherein the thickness of the paper is about about 75gsm to about 85gsm paper.

4. A composition according to any preceding claim wherein the lamella of polymer comprising polyethylene at least partly melts under conditions of heat applied during a heat sealing process.

5. A composition according to any preceding claim wherein the composition is oxo-biodegradable.

6. A band produced of a composition according to any one of claims 1 to 5 for securing to a net comprising a tube drawn together and sealed at first and second ends wherein the band is capable of being wrapped around the net and heat sealed to the ends of the net.

7. A pack comprising a net and a band according to claim 6, wherein the net comprises a tube drawn together and sealed at first and second ends and the band is wrapped around the net and sealed to the ends of the net at first and second heat seal areas of the band.

8. A pack according to claim 7 wherein the band comprises a first face and a second face, wherein the first face faces the net and the second face faces away from the net; optionally wherein the first face comprises a lamella of polymer comprising polyethylene.

9. A pack according to claim 8 wherein at least the second face comprises a lamella of paper, optionally wherein the second face is printed.

10. A pack according to any one of claims 7 to 9 wherein a front band is secured to the net and a back band is secured to the net opposite the front band; optionally wherein (a) the front band and the back band are heat sealed together and to the ends of the net at first and second heat seal areas of the bands; or (b) the first heat seal area is greater in size than the second seal area.

11. A pack according to any one of claims 7 to 10 wherein an oxo-biodegradable additive is additionally included in the composition of the net, thereby rendering the entire pack oxo-biodegradable.

12. A pack according to any one of claims 7 to 11 wherein the band is between 70mm and 100mm wide.

13. A method for assembly of a pack according to any one of claims 7 to 12 which comprises the steps of feeding a tube of net into a packaging machine, sealing food into a pack by sealing the tube at a first end of the tube and a second end of the tube, simultaneously, cutting a band and sealing the pack at a first end of the tube and at a second end of the tube; optionally wherein the band is provided in the form of a continuous roll, optionally wherein it is cut into lengths at the time of application by heat sealing to the net of a pack.

## Patentansprüche

1. Zusammensetzung zur Verwendung bei der Herstellung einer Verpackung von Nahrungsmitteln oder Nahrungsmittelprodukten, worin die Zusammensetzung einen laminierten Aufbau umfasst, der mindestens eine Papierlamelle aufweist und mindestens eine Lamelle mit einer Dicke von etwa 20µm bis etwa 40µm aus einem Polymer, welches Polyethylen umfasst, worin das Polyethylen umfassende Polymer ein Oxo-biologisch abbaubares Additiv enthält und worin das Polyethylen umfassende Polymer bis zu 3% des Oxo-biologisch abbaubaren Additivs enthält.

2. Zusammensetzung nach Anspruch 1, worin die Papierlamelle ein nicht-beschichtetes formbares Papier umfasst.

3. Zusammensetzung nach Anspruch 1 oder 2, worin das Papier während eines Hitzeversiegelungsvorgangs aufgebrachte Wärme abführen kann, worin das Polyethylen umfassende Polymer mindestens teilweise schmilzt; wahlweise worin die Dicke des Papiers etwa 75gsm bis etwa 85gsm Papier beträgt.

4. Zusammensetzung nach einem der vorstehenden Ansprüche, worin die Lamelle mit Polyethylen umfassendem Polymer mindestens teilweise bei Wärme-Bedingungen, die während eines Hitzeversiegelungsvorgangs vorherrschen, schmilzt.

5. Zusammensetzung nach einem der vorstehenden Ansprüche, worin die Zusammensetzung Oxo-biologisch abbaubar ist.

6. Band, welches aus einer Zusammensetzung nach einem der Ansprüche 1 bis 5 hergestellt ist, zum Sichern eines Netzes, das eine zusammengezogene und an einem ersten und zweiten Ende versiegelte Röhre umfasst, worin das Band um das Netz gewickelt werden und an die Enden des Netzes heissversiegelt werden kann.

7. Packung, welche ein Netz und ein Band nach Anspruch 6 umfasst, worin das Netz eine zusammengezogene und an einem ersten und zweiten Ende versiegelte Röhre umfasst, und worin das Band um das Netz gewickelt und an die Enden des Netzes an einem ersten und zweiten Hitze-Versiegelungsbereich des Bandes heissversiegelt ist.

8. Packung nach Anspruch 7, worin das Band eine erste Fläche und eine zweite Fläche aufweist, worin die erste Fläche dem Netz gegenüberliegt und worin die zweite Fläche vom Netz abgewandt ist; wahlweise worin die erste Fläche eine Lamelle aus Polyethylen umfassendem Polymer umfasst.

9. Packung nach Anspruch 8, worin mindestens die zweite Fläche eine Papierlamelle umfasst, wahlweise worin die zweite Fläche bedruckt ist.

10. Packung nach einem der Ansprüche 7 bis 9 worin ein vorderes Band an dem Netz gesichert ist und worin eine hinteres Band an dem Netz, abgewandt zu dem vorderen Band gesichert ist; wahlweise worin (a) das vordere Band und das hintere Band miteinander und an die Enden des Netzes an einem ersten und zweiten Hitzeversiegelungsbereich hitzeversiegelt sind; oder (b) worin der erste Hitzeversiegelungsbereich in seinen Abmessungen größer ist als der zweite Hitzeversiegelungsbereich.

11. Packung nach einem der Ansprüche 7 bis 10 worin ein zusätzliches Oxo-biologisch abbaubares Additiv in der Zusammensetzung des Netzes vorgesehen ist, wodurch die gesamte Packung Oxo-biologisch abbaubar ist.

12. Packung nach einem der Ansprüche 7 bis 11, worin das Band zwischen 70 mm und 100 mm breit ist.

13. Verfahren zum Aufbau einer Packung nach einem der Ansprüche 7 bis 12, welches die Schritte umfasst, Zuführen einer Röhre aus Netz in eine Verpackungsmaschine, Versiegeln von Nahrungsmittel in der Verpackung durch Versiegeln der Röhre an einem ersten Ende der Röhre und an einem zweiten Ende der Röhre, gleichzeitig, Schneiden eines Bandes und Versiegeln der Packung an einem ersten Ende der Röhre und einem zweiten Ende der Röhre; wahlweise worin das Band in Form einer kontinuierlichen Rolle bereitgestellt wird, wahlweise worin es zum Zeitpunkt des Einbringens der Hitze auf das Netz einer Packung in Längen geschnitten wird.

## Revendications

1. Composition pour une utilisation dans la production d'emballage pour des aliments ou des produits alimentaires, la composition comprenant une structure stratifiée ayant au moins une lamelle de papier et au moins une lamelle ayant une épaisseur d'environ 20 µm à environ 40 µm de polymère comprenant du polyéthylène, le polymère comprenant du polyéthylène ayant un additif oxo-biodégradable et le polymère comprenant du polyéthylène ayant jusqu'à 3 % de l'additif oxo-biodégradable.

2. Composition selon la revendication 1, dans laquelle la lamelle de papier comprend un papier façonnable non revêtu.

3. Composition selon la revendication 1 ou 2, dans laquelle le papier est capable de transférer de la chaleur appliquée pendant un processus de thermoscellage dans lequel le polymère comprenant du polyéthylène est au moins partiellement fondu ; l'épaisseur du papier étant facultativement d'environ 75 g/m² à environ 85 g/m².

4. Composition selon l'une quelconque des revendications précédentes, dans laquelle la lamelle de polymère comprenant du polyéthylène fond au moins partiellement dans des conditions de chaleur appliquée pendant un processus de thermoscellage.

5. Composition selon l'une quelconque des revendications précédentes, dans laquelle la composition est oxo-biodégradable.

6. Bande produite à partir d'une composition selon l'une quelconque des revendications 1 à 5, pour une fixation à un filet comprenant un tube étirés et scellés à des première et seconde extrémités, la bande étant capable d'être enveloppée autour du filet et thermoscellée aux extrémités du filet.

7. Emballage comprenant un filet et une bande selon la revendication 6, dans lequel le filet comprend un tube étirés et scellés à des première et seconde extrémités et la bande est enveloppée autour du filet et scellée aux extrémités du filet à des première et seconde zones de thermoscellage de la bande.

8. Emballage selon la revendication 7, dans lequel la bande comprend une première face et une seconde face, la première face étant dirigée vers le filet et la seconde face étant dirigée à l'opposé du filet ; la première face comprenant facultativement une lamelle de polymère comprenant du polyéthylène.

9. Emballage selon la revendication 8, dans lequel au moins la seconde face comprend une lamelle de papier, la seconde face étant facultativement imprimée.

10. Emballage selon l'une quelconque des revendications 7 à 9, dans lequel une bande avant est fixée au filet et une bande arrière est fixée au filet à l'opposé de la bande avant ; facultativement (a) la bande avant et la bande arrière étant thermoscellées ensemble et aux extrémités du filet à des première et seconde zones de thermoscellage des bandes ; ou (b) la première surface de thermoscellage étant plus grande que la seconde surface de scellage.

11. Emballage selon l'une quelconque des revendications 7 à 10, dans lequel un additif oxo-biodégradable est également inclus dans la composition du filet, rendant ainsi l'emballage entier oxo-biodégradable.

12. Emballage selon l'une quelconque des revendications 7 à 11, dans lequel la bande est entre 70 mm et 100 mm de large.

13. Procédé pour l'assemblage d'un emballage selon l'une quelconque des revendications 7 à 12, comprenant les étapes pour acheminer un tube de filet dans une machine d'emballage, sceller un aliment dans un emballage par scellage simultané du tube à une première extrémité du tube et à une seconde extrémité du tube, couper une bande et sceller l'emballage à une première extrémité du tube et à une seconde extrémité du tube ; la bande étant facultativement fournie sous la forme d'un rouleau continu, elle étant facultativement coupée en longueurs au moment de l'application par thermoscellage au filet d'un emballage.
